# EUROPEAN PATENT APPLICATION

(11) **EP 2 690 724 A2**
(43) Date of publication of application: **29.01.2014**
(21) Application number: 13177000.0
(22) Date of filing: 18.07.2013
(51) Int. Cl.: H01S 3/11, G02B 6/02, G02F 1/35, H01S 3/067

(54) **Saturable absorber for fiber laser mode-locking, fiber Bragg grating with a saturable absorption property and mode-locked fiber laser**

(30) Priority: 25.07.2012 LT 2012069
(71) Applicant: UAB "Ekspla", 02300 Vilnius (LT)
(72) Inventor: Rusteika, Nerijus, 09210 Vilnius (LT); Michailovas, Andrejus, 06325 Vilnius (LT)
(74) Representative: Draugeliene, Virgina Adolfina

(57) **Abstract**

A saturable absorber for fiber laser mode-locking comprises a single-mode optical fiber (1) having a fiber portion (2) which is tapered or in which at least one longitudinal groove or at least one transverse hole is formed. Said tapered fiber portion is coated with a composite bleachable material (3), or said grooves or holes are filled with said composite material. In order to broaden a range of applications of the saturable and to extend its service life, said composite bleachable material comprises an inorganic matrix with an index of refraction similar to an index of refraction of the optical fiber and a nonlinear material embedded into said inorganic matrix, wherein said nonlinear material possesses a nonlinear absorption property and bleaches when exposed to laser radiation of intensity from 5MW/cm² to 500MW/cm², while a waist diameter and of said tapered fiber portion or a number of grooves or holes and their configuration are chosen to satisfy a condition that laser light while propagating in the saturable absorber experiences losses between 1% and 50%. The proposed saturable absorber can be used in a resonator of a mode-locked fiber laser or incorporated into a construction of a fiber Bragg grating.

## Description

The present invention relates to lasers, more particularly, it relates to saturable absorbers, and is suitable for fiber laser mode-locking. This invention can be employed for generation of ultrashort light pulses which have applications in various areas such as scientific research, material processing, medicine and other.

In this invention, a saturable absorber for fiber laser mode-locking is described. Its operation is based on a nonlinear optical absorption property. The mode-locker is placed within a laser cavity introducing losses which depend on light intensity circulating therein: light of higher intensity experiences less absorption losses. Since, a laser light possesses natural intensity fluctuations even in the absence of external disturbances, and high-intensity spikes experience less losses, they grow over time. Under appropriate conditions this growth may end up with a single ultrashort pulse circulating within the laser cavity. The described mode of operation is referred to as a mode-locked regime.

There are known photonic devices with a saturable absorption property-that are based on semiconductor technology (comprising quantum dots and semiconductor heterostructures). Semiconductor saturable absorber mirrors (SESAMs), characterized by the increasing reflectance with an increasing light intensity, are widely used for mode-locking of solid state lasers.

Manufacturing technology of SESAMs is mature and allows for optimization of various parameters (e.g., relaxation-time, saturation intensity. However, they are poorly compatible with fiber technology. Currently used semiconductor saturable absorbers used for fiber laser mode-locking are simply mechanically pressed to a polished fiber end, thus ensuring an optical contact between a core of the optical fiber and a surface of SESAM. This way of integration of the saturable absorber into a fiber laser cavity limits a number of possible laser resonator configurations. Moreover, SESAM technology is complex and there are only a few commercial suppliers.

There are also known saturable absorbers comprising carbon nanotubes (CNTs) or graphene (G). Single-wall carbon nanotubes possess several optical properties making them attractive as a material for saturable absorbers. First, the nanotubes have an ultrafast excitation relaxation (τ ≈ 200 fs) what is important in order to obtain shorter than 1 ps pulses. Second, the optical absorption peak depends on the nanotube diameter, which can be changed depending on the growing conditions. Third, their saturation threshold due to a quasi-one-dimensional structure is very low. Graphene, which is a related material to carbon nanotubes, have similar characteristics. In some cases, graphene may be more attractive than CNTs because of a very broad absorption band.

Compared to semiconductor technology, fabrication of carbon nanotubes or graphene and optical elements containing carbon nanotubes or graphene is much simpler and low-cost. Perhaps the biggest advantage of carbon nanotubes and graphene is that they can be incorporated into different materials without significantly altering their optical properties. This allows for configurations that are difficult to realize using SESAMs.

Carbon nanotubes- or graphene-based saturable absorbers (CNT-SA or GSA) used for fiber laser mode-locking, according to methods of their incorporation into fibers, may be classified into several groups:
(a) direct interaction type; in these configurations carbon nanotubes or graphene are placed into a direct laser beam, for example, spraying a thin layer of CNTs on a cleaved fiber end and connecting it to an end of another fiber;
(b) evanescent-field interaction type; in these configurations carbon nanotubes or graphene interact with laser radiation only through evanescent field, for example, carbon nanotubes or graphene or a composite of a polymer matrix with carbon nanotubes or graphene are deposited on a side-polished fiber;
(c) intermediate type; for example, a solution of carbon nanotubes is injected into a microchannel inscribed across an optical fiber, which may or may not cross the fiber through a centre of its core. All of these methods are used in practice for mode-locking of fiber lasers and are described in the literature.

One of the most important technological challenges at fabrication of carbon nanotubes-based or graphene-based saturable absorbers is a selection of a medium in which the carbon nanotubes are dispersed. Pure carbon nanotubes (or graphene), when exposed to the laser radiation and environment, quickly degrade. In addition, a layer of carbon nanotubes and graphene without using a binder is not stable mechanically.

T R. Schibli et al., Opt. Express 13, 8025 (2005) describes a saturable absorber comprising CNTs embedded into a polymer matrix. Such a compound is chemically stable and it can be easily deposited on all of the above-mentioned structures (the polished fiber end or side) for realization of fiber saturable absorbers. However, polymeric materials do not prevent carbon naotubes from the ambient singlet oxygen: CNTs as well as the polymer matrices themselves degrade when exposed to the ambient air. In addition, a composite material based on a polymer matrix does not handle high radiation flow, what limits a practical application of said devices.

There are also known saturable absorbers wherein a material with a saturable absorption property is a composite comprising CNTs embedded in an inorganic matrix [Y.-W Song et al., Optics Communications 283, 3740-3742 (2010) and H.-J. Kim et al., Opt. Express 19, 4762-4767 (2011). Low-temperature fabrication techniques allow for obtaining a composite consisting of CNTs and SiO₂, that exhibits excellent characteristics: SiO₂ matrix is transparent for laser radiation, is chemically and thermally stable, has a high thermal conductivity, thus removes a heat released in CNTs at a process of absorption; whereas carbon nanotubes hardly affect an index of refraction of the composite. An index of refraction of the CNTs/SiO₂ composite material is close to an index of refraction of an optical fiber. However, in the proposed solutions the composite material made on a basis of inorganic matrix is incorporated into an optical fiber, by deposing a layer of it between two fiber ferrules in a standard fiber connector. Therefore, a direct interaction between laser radiation and carbon nanotubes occurs, what means that the strength of the interaction is controlled only by selecting a thickness of the composite material layer or a concentration of CNTs. A drawback of these saturable absorbers of the prior art is related to a limited maximum thickness of a layer and a limited concentration of CNTs that may be achieved - it is difficult to obtain a high initial absorption coefficient, which is important for saturable absorbers used in lasers with high gain, for example, ytterbium-doped lasers. In addition, saturable absorbers formed between two fiber ends may be sensitive to the alignment accuracy and external mechanical factors (more vulnerable than any other configuration wherein the integrity of a fiber is not violated).

U.S. patent application US2011280263 (K. Kieu, F. R. Wise) describes a saturable absorber constructed from a_tapered fiber made by a heating and pulling method which is coated with a CNTs/polymer composite material. This configuration of saturable absorbers is easily adjusted by changing geometrical parameters (waist diameter, length and shape) what can be carried out by selecting a heating temperature, pulling rate and a length of a fiber portion that is being heated.Herein an interaction volume is much greater than in a case of direct interaction. Thus a density of light energy absorbed by the CNTs is considerably smaller, and an optical or thermal damage becomes less probable. Nevertheless, said absorber has the following drawbacks. In order to achieve a sufficient strength of interaction between laser light and carbon nanotubes, a waist of a tapered fiber must be reduced to a diameter of less than 5µm. Such a structure is mechanically weak and requires a special protection against a breakage. Moreover, at high laser light intensities, the CNTs/polymer composite material degrades, i.e. its saturable absorption property deteriorates. As was described above, the degradation of the composite material made on a basis of the polymer matrix is due to photochemical reaction with the singlet oxygen and interaction with laser light. Said drawbacks narrow the field of use of prior art saturable absorbers and shorten their service life, especially at high powers.

In A. Martinez et al., Opt. Express 16, 15425-15430 (2008), A. Martinez et al., Opt. Express 18, 11008-11014 (2010) and C. Mou et al., Appl. Phys. Lett. 100, 101110 (2012) yet another configuration of saturable absorbers is described. Here, saturable absorbers comprise a fiber portion having a transversally inscribed microchannel or a microslot filled with liquid solutions of carbon nanotubes. The volume and the strength of interaction between laser light and carbon nanotubes can be controlled by choosing a size of said microchannel/microslot and its location with respect to the fiber core (crosses it or is adjacent to it). Dispersing of CNTs in a solvent ensures their uniform distribution within a volume of said microchannel/microslot and good heat removal. However, CNTs in liquid solutions are less protected from the optical and thermal damage than the CNTs embedded in a stationary matrix. Moreover, these saturable absorbers are impractical because a solvent may evaporate, and are suitable only for laboratory systems, not for manufacturing of commercial fiber lasers.

The aim of this invention is to broaden the range of applications of a saturable absorber used for fiber laser mode-locking, also to extend its service life, especially at high powers.

According to the present invention saturable absorber for fiber laser mode-locking comprising a single-mode optical fiber having a tapered fiber portion which is coated with a composite bleachable material, said composite bleachable material comprises an inorganic matrix with an index of refraction similar to an index of refraction of said single-mode optical fiber, and a material with a nonlinear absorption property embedded into said inorganic matrix, wherein said material with a nonlinear absorption property bleaches when exposed to laser radiation of high intensity, values of which are in a range from 5MW/cm² to 500MW/cm², whereas a waist diameter and a length of said tapered fiber portion are chosen to satisfy a condition that laser light while propagating in the saturable absorber is affected by said composite bleachable material and experiences losses which are in a range between 1% and 50%.

In another preferable embodiment saturable absorber for fiber laser mode-locking comprising a single-mode optical fiber having a fiber portion with at least one groove or at least one hole formed therein, which is filled with a composite bleachable material, said composite bleachable material comprises_an inorganic matrix with an index of refraction similar to an index of refraction of said single-mode optical fiber, and a material with a nonlinear absorption property embedded into said inorganic matrix, wherein said material with a nonlinear absorption property bleaches when exposed to laser radiation of high intensity, values of which are in a range from 5MW/cm² to 500MW/cm², whereas
a number of said grooves or holes formed in said fiber portion and their configuration are chosen to satisfy a condition that laser light while propagating in the saturable absorber is affected by said composite bleachable material and experiences losses which are in a range between 1% and 50%.

Said composite bleachable material is fabricated via a sol-gel manufacturing technology.

Said inorganic matrix is SiO₂ glass matrix fabricated via a sol-gel technology.

Said material with a nonlinear absorption property embedded into the inorganic matrix is selected from a group consisting of carbon nanotubes, graphene and semiconductor quantum dots.

In further preferable embodiments said groove or grooves which are formed in the fiber portion extend along said fiber portion, or said hole or holes which are formed in the fiber portion cross said fiber portion transversally. The tapered fiber portion coated with the composite bleachable material or the fiber portion with at least one groove or with at least one hole filled with the composite bleachable material is coated with a polymer layer

Also, a mode-locked fiber laser containing a saturable absorber of this invention is proposed.

Further, a saturable absorber mirror, for fiber laser mode-locking is proposed. It comprises a fiber Bragg grating with an incorporated saturable absorber according to this invention and may be used as one of the fiber laser end mirrors.

A similarity between refractive indices of said composite bleachable material and a material of an optical fiber leads to a good laser field penetration into the composite material layer resulting in a strong nonlinear absorption. In the tapered-fiber saturable absorber of this invention the interaction between the laser radiation and the nonlinear material is stronger as compared to the tapered-fiber saturable absorber of the prior art, in which the fiber taper was coated with the composite material based on a polymer matrix. An increased surface of interaction reduces a density of the absorbed energy and improves resistance to laser radiation. On the other hand, geometrical parameters may be chosen more freely.

The main advantages of the sol-gel technology and the composite material fabricated via the sol-gel process are low price and a possibility to be implemented in laboratory-like conditions. Moreover, the composite material fabricated via the sol-gel process is easy to use: at first it is a semirigid gel, later solidifies. Therefore, it can be easily sprayed onto the fiber taper or injected into grooves/holes. After solidification, the composite material based on the inorganic matrix is an excellent mechanical stabilizer.

Typically, a tapered-fiber geometry has several limitations. A variation of the geometrical parameters influences mechanical and waveguiding properties of a fiber taper. In the saturable absorber of this invention with a composite material made on a basis of the inorganic matrix, there is a great flexibility in selection of a waist diameter and a length of the tapered fiber portion without spoiling mechanical and/or waveguiding properties. With the deep light penetration, it is possible to select geometrical parameters of the tapered-fiber saturable absorber to have mechanical properties almost coinciding with those of the untapered fiber.

The solidified composite material based on the inorganic matrix strengthens the modified (tapered or micromachined) fiber. The tapered fiber or the fiber with grooves/holes filled with the solid composite material is characterized by a high mechanical robustness. The saturable absorber of the groove geometry is particularly mechanically stable. Its mechanical properties are much better than mechanical properties of the tapered-fiber geometry saturable absorber since an inner structure of the fiber is preserved while forming the groove, only a small defect is introduced. A mechanical stability of the fiber with the grooves that are filled with a solid composite material does not differ from a mechanical stability of an unmodified optical fiber. When coated with an additional protective polymeric layer a structure of the saturable absorbers of this invention is even more protected from external factors, therefore can be used without additional packaging as mode-lockers for fiber lasers.

Inorganic matrix such as SiO2 is chemically and optically stable, has a high thermal conductivity, also protects carbon nanotubes or other nonlinear materials embedded therein from the ambient oxygen. Solving of the degradation problem of materials used in saturable absorbers is essential for commercialization of in-fiber saturable absorbers.

To summarize, using of the composite bleachable material based on the inorganic matrix, preferably SiO₂, in the tapered-fiber, groove or hole geometry results in improved resistance to optical radiation, longer service life and higher mechanical stability of saturable absorbers of this invention. These features lead to a flexibility to choose more comfortable geometrical parameters and make saturable absorbers of this invention suitable for manufacturing of industrial fiber lasers.

The saturable absorber mirror comprising the fiber Bragg grating with the incorporated saturable absorber of this invention has the following advantages: high efficiency of a saturable absorption, high damage threshold, and also low price. It is a fully in-fiber optical device suitable for realization of mode-locked fiber lasers without free-space components. The high efficiency of the saturable absorption is due to the fact that a nonlinear material is placed in the vicinity of the maximum radiation intensity within laser cavity.

Close to the mirror's surface an incident and reflected laser beams overlap and interfere. In consequence, the resulting intensity peaks up to 4 times exceed intensities of the individual beams, and the saturable absorption is more effective. A second reason of the higher saturable absorption efficiency, as compared to the saturable absorber that is not incorporated into the Bragg grating, is that the composite bleachable material covers many intensity peaks i.e. more than one intensity maximum, and the saturable absorption sums up.

There is yet another advantage of the saturable absorber mirror of the present invention, when compared with the semiconductor saturable absorber mirrors. In semiconductor devices, a size of the quantum structure, e.g. quantum well, is determined by the spectral region to which said devices is designed. Since the size of the quantum structure is very small, its position (with respect a location of maximum laser radiation intensity) must be adjusted at high accuracy in order to achieve effective saturable absorption. This requires a high precision of SESAM fabrication. In the saturable absorber mirror of this invention, a spectral region of a saturable absorption is related to the characteristics of the nonlinear material (e.g. carbon nanotubes) embedded in the matrix, while dimensions of a groove or hole are chosen independently. Therefore, a fabrication of the saturable absorber mirror of the present invention does not require complex manufacturing technology, while the saturable absorption property of the device is not sensitive to a precise groove or hole position.

The described advantages of the present invention broaden a range of applications of saturable absorbers used for fiber laser mode-locking, also extend their service life, especially when operating at high-power levels.

The invention is explained in greater detail in the following drawings:
Fig.1a - a longitudinal section of a saturable absorber comprising a tapered fiber portion that is coated with a composite bleachable material;
Fig.1b - a cross-section A-A of the saturable absorber according to Fig.1a;
Fig.1c - a magnified view of a tapered portion of the saturable absorber according to Fig.1a and a light pulse propagating therein;
Fig.2a - a longitudinal section of the saturable absorber according to Fig.1a with a protective layer;
Fig.2b - a cross-section A-A of the saturable absorber according to Fig.2a;
Fig.2c - a magnified view of a tapered portion of the saturable absorber according to Fig.2a and a light pulse propagating therein;
Fig.3a - a longitudinal section of a saturable absorber comprising a fiber portion with one longitudinal groove filled with a composite bleachable material;
Fig.3b - a cross-section A-A of the saturable absorber according to Fig.3a;

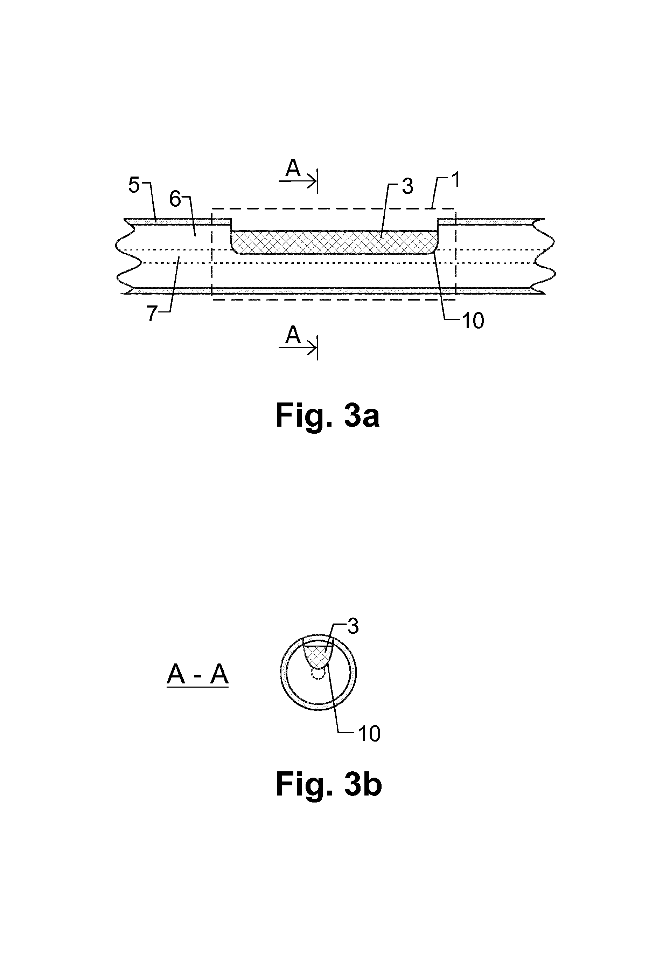

Fig.4a - a longitudinal section of the saturable absorber according to Fig.3a with a protective layer;

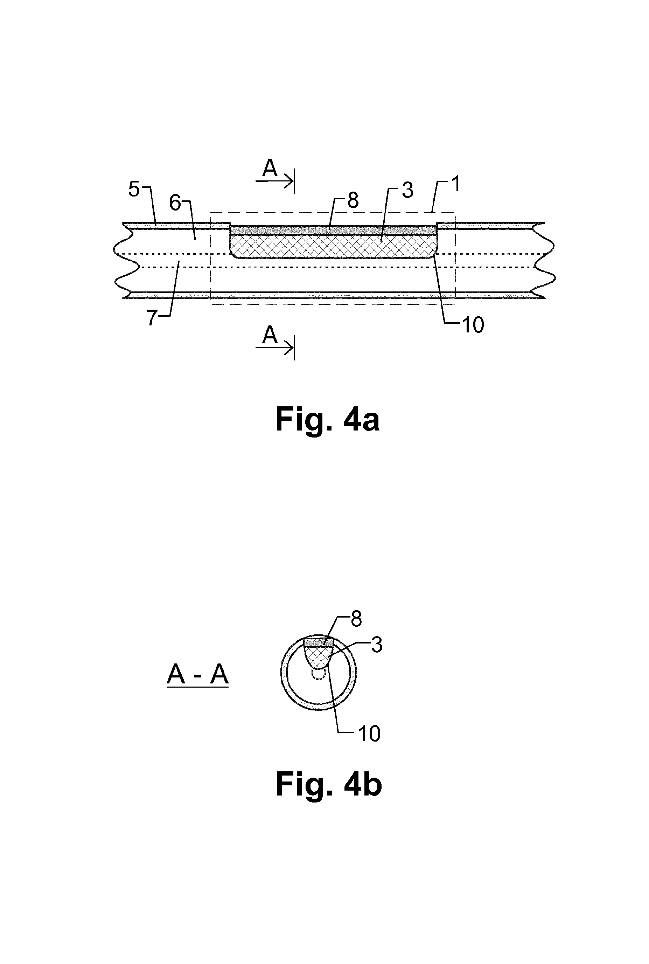

Fig.4b - a cross-section A-A of the saturable absorber according to Fig.4a;
Fig.5a - a longitudinal section of a saturable absorber comprising a fiber portion with three longitudinal grooves filled with a composite bleachable material;

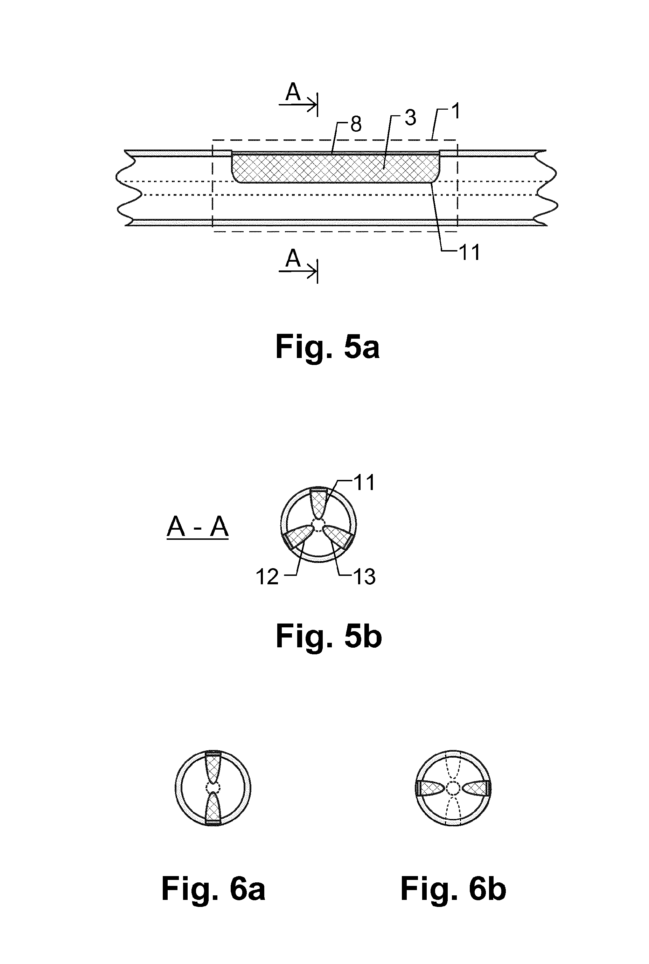

Fig.5b - a cross-section A-A of the saturable absorber according to Fig.5a;
Fig.6a - a cross-section of a saturable absorber comprising a fiber portion with two longitudinal grooves filled with a composite bleachable material;
Fig.6b - a cross-section of a saturable absorber comprising a fiber portion with four longitudinal grooves, which are shifted with respect to each other along the length of the fiber, filled with a composite bleachable material;
Fig.7a - a longitudinal section of a saturable absorber comprising a fiber portion with one transverse hole filled with a composite bleachable material;

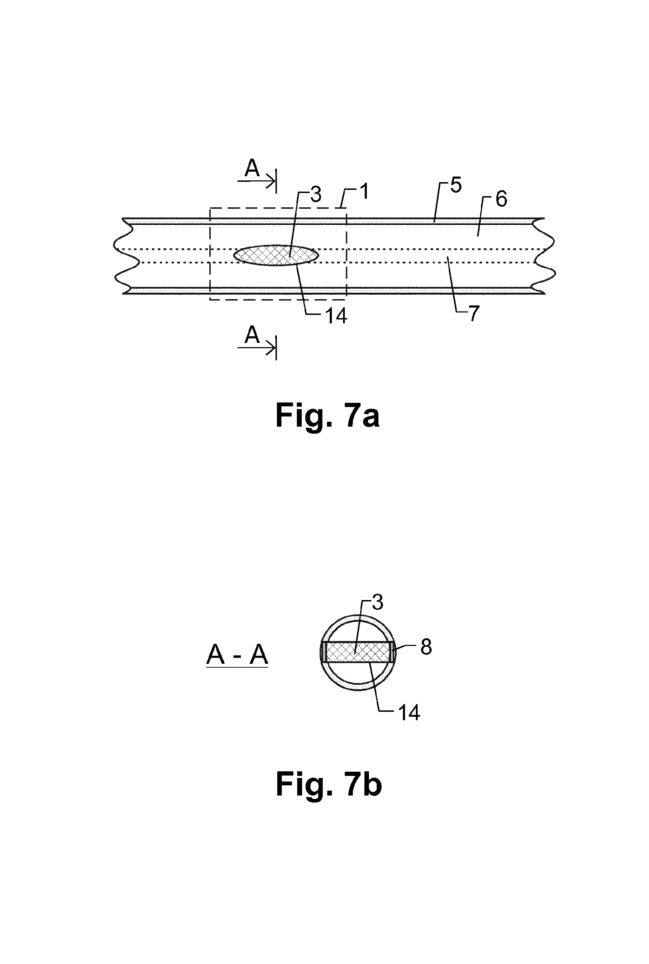

Fig.7b - a cross-section A-A of the saturable absorber according to Fig.7a;
Fig.8a - a longitudinal section of a saturable absorber comprising a fiber portion with three intersecting transverse holes filled with a composite bleachable material;

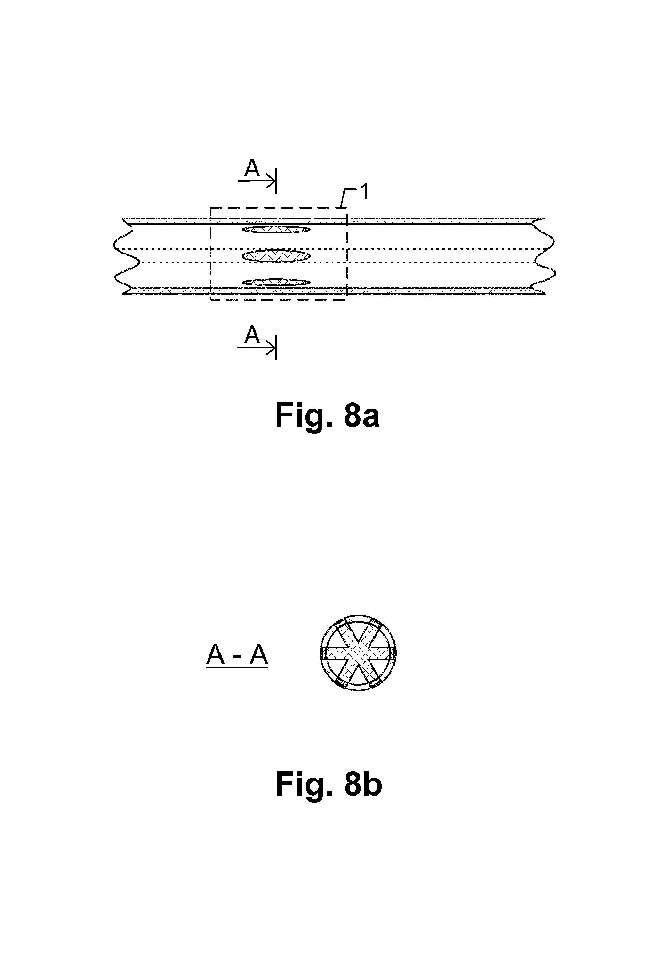

Fig.8b - a cross-section A-A of the saturable absorber according to Fig.8a;
Fig.9a - a longitudinal section of a saturable absorber comprising a fiber portion with two nonintersecting transverse holes filled with a composite bleachable material;

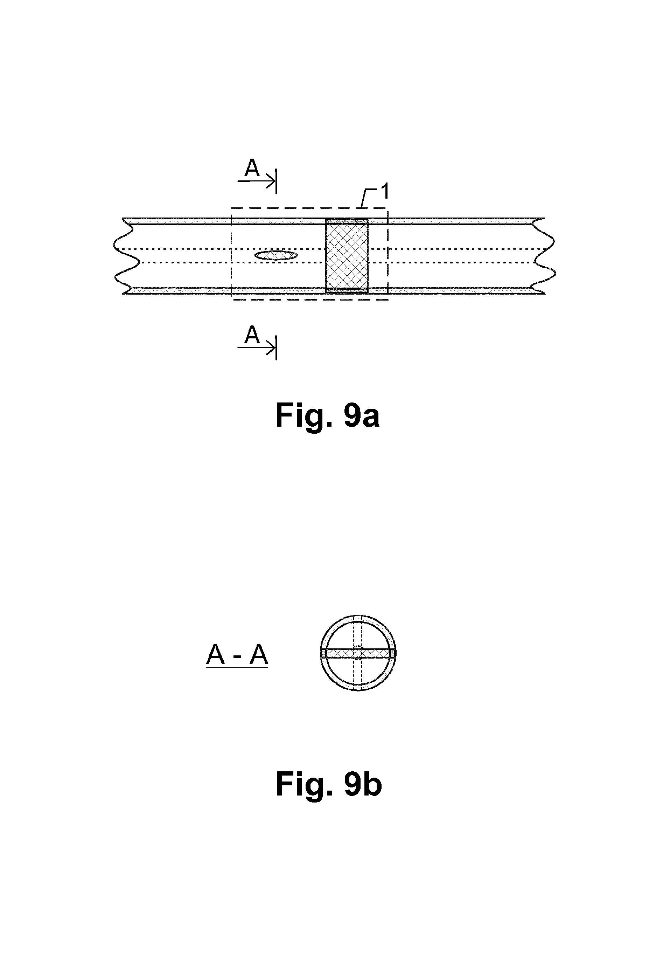

Fig.9b - a cross-section A-A of the saturable absorber according to Fig.9a;

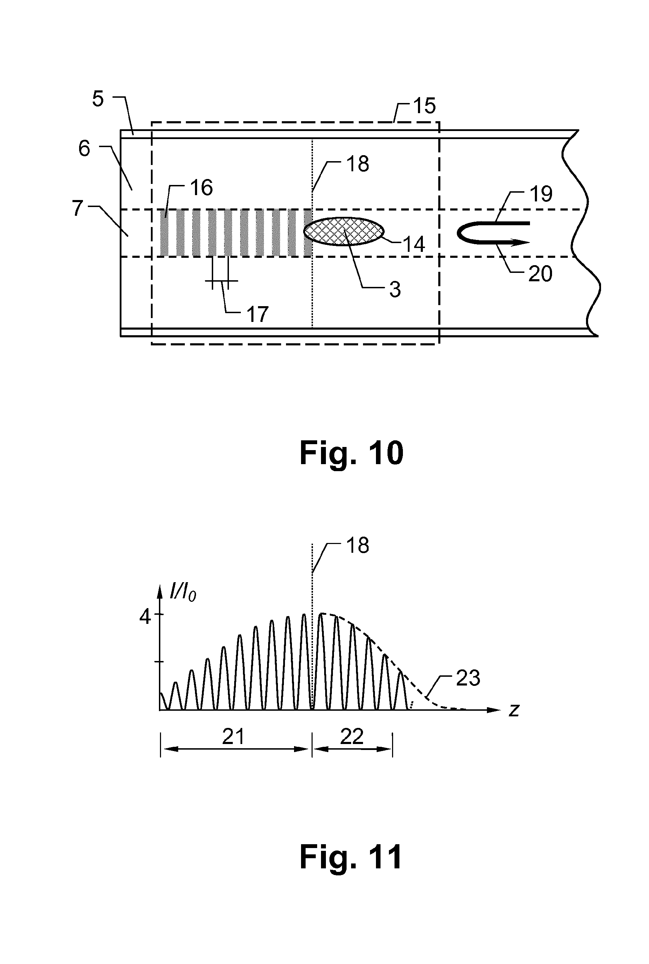

Fig.10 - a saturable absorber mirror_comprising a fiber Bragg grating with the incorporated saturable absorber according to Fig.7a, Fig.7b;
Fig.11 - an axial intensity distribution of laser radiation inside and close to the saturable absorber mirror of Fig.10;

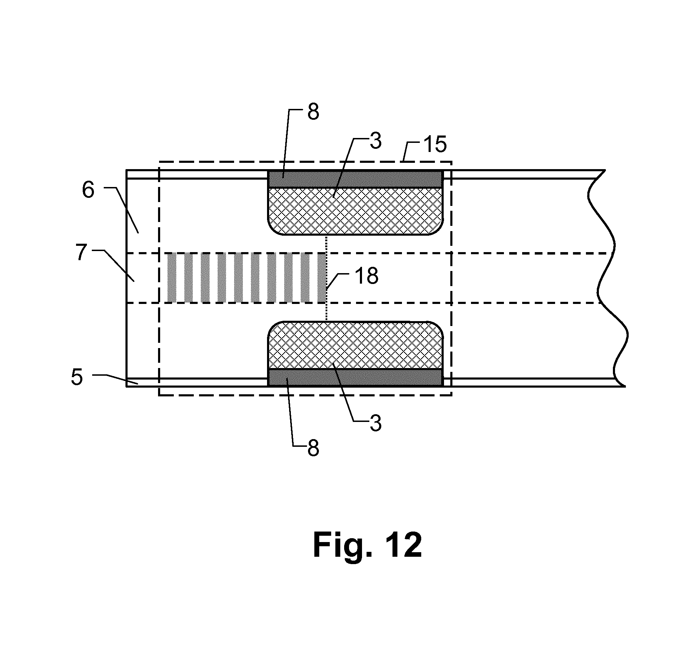

Fig.12 - a saturable absorber mirror comprising a fiber Bragg grating with the incorporated saturable absorber according to Fig.6a, Fig.6b;

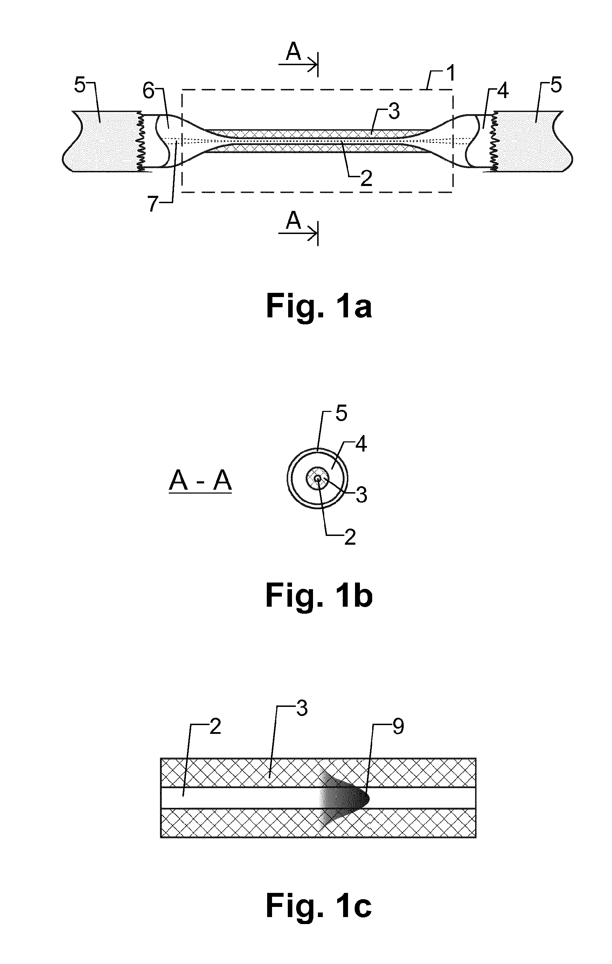

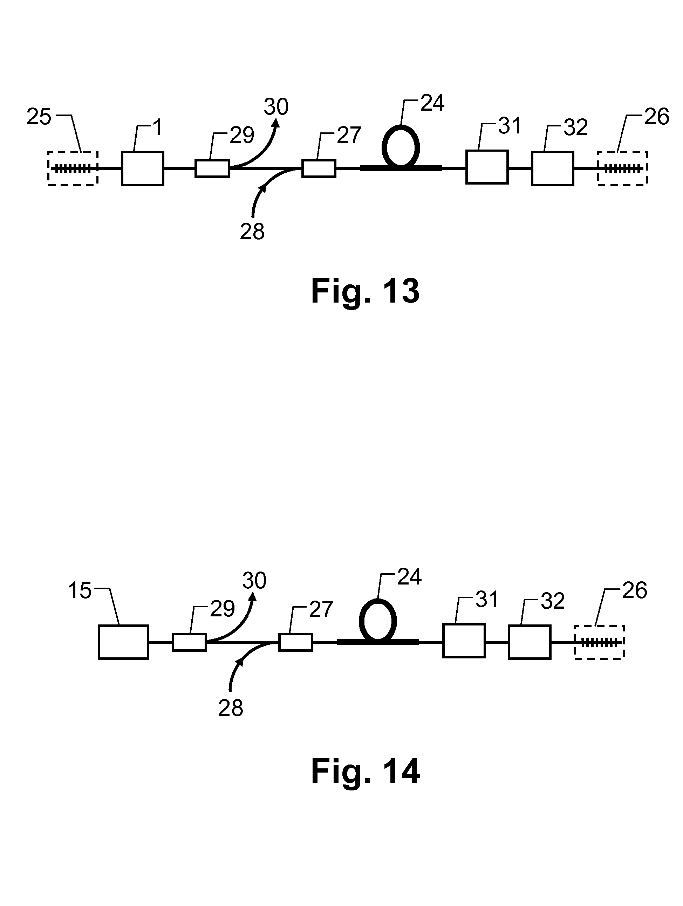

Fig.13 - a mode-locked fiber laser of linear geometry employing the saturable absorber according to any of Fig.1a - Fig.9b illustrations;
Fig.14 - a mode-locked fiber laser of linear geometry employing the saturable absorber mirror according to Fig.10 or Fig.12 illustration;

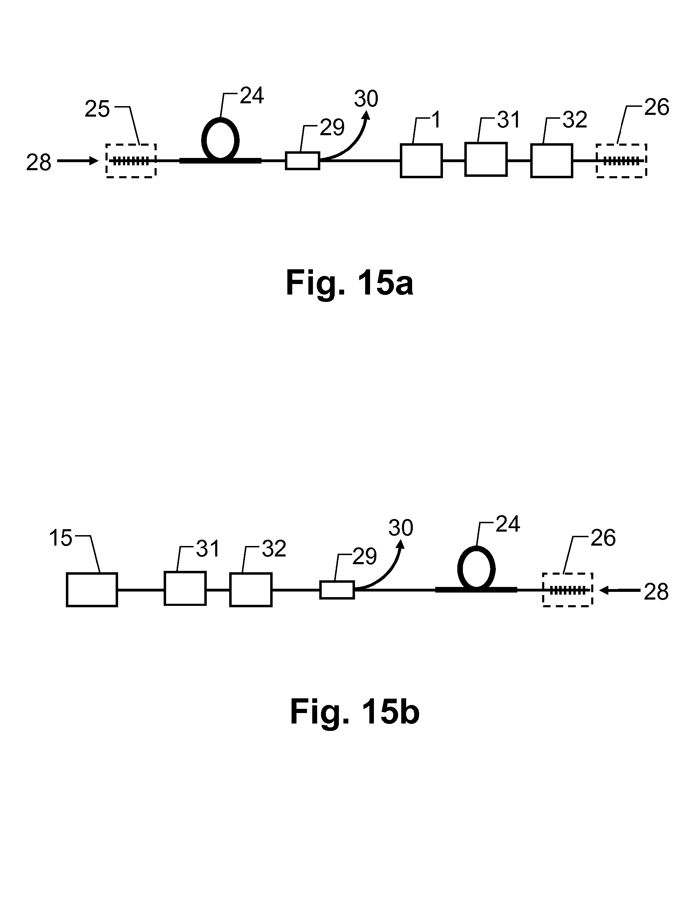

Fig.15a, Fig.15b - mode-locked fiber lasers of linear geometry employing the saturable absorbers or the saturable absorber mirrors of this invention with a pump radiation coupled throught a resonator end mirror;

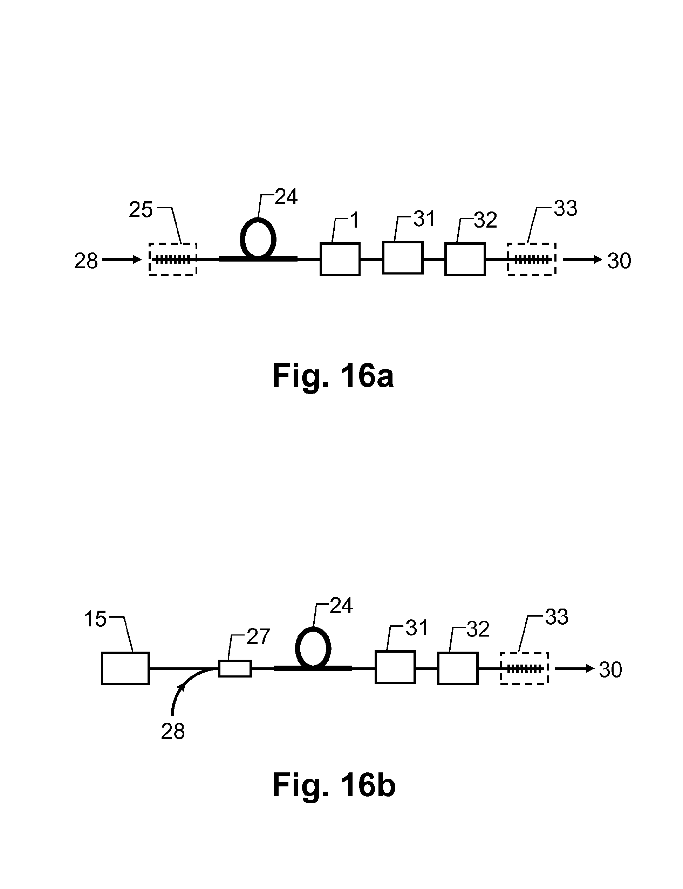

Fig.16a, Fig.16b - mode-locked fiber lasers of linear geometry employing the saturable absorbers or the saturable absorber mirrors of this invention with laser radiation outcoupling through a resonator end mirror;

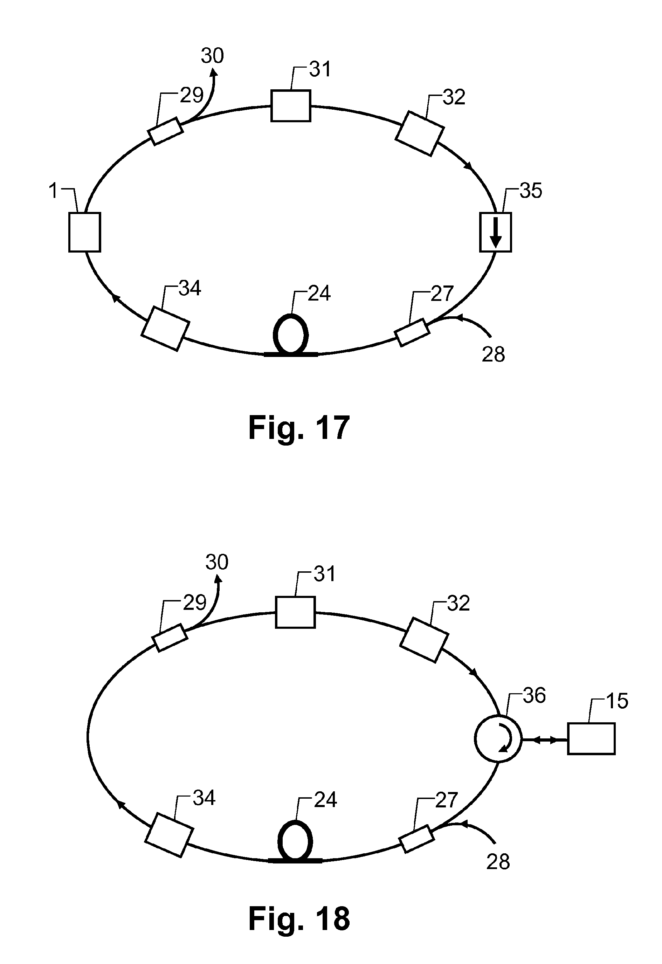

Fig.17 - a mode-locked fiber laser of ring geometry employing any of the saturable absorbers of this invention;
Fig.18 - a mode-locked fiber laser of ring geometry employing any of the saturable absorber mirrors of this invention;

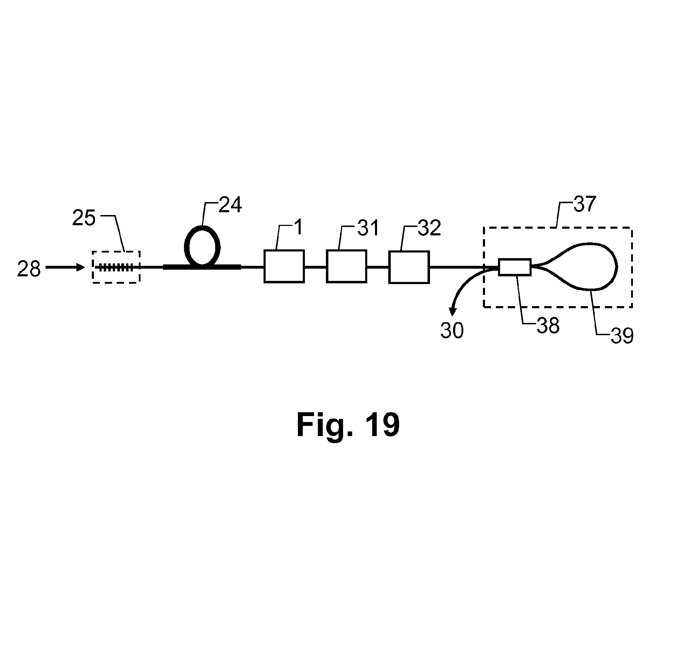

Fig.19 - a mode-locked fiber laser of linear geometry employing any of the saturable absorbers of this invention, in which one of resonator end mirrors is a fiber loop mirror.

Drawings Fig.1a - Fig.9b illustrate various configurations of a saturable absorber 1 of the present invention. The saturable absorber according to any configuration comprises a single-mode optical fiber (SMF) with an incorporated composite bleachable material, absorption of which bleaches when exposed to laser radiation of high intensity (5MW/cm² - 500MW/cm²). This saturable absorber can be employed as a mode-locker for fiber lasers.

In Fig.1a-1b, a saturable absorber 1 for fiber laser mode-locking is depicted, in which a tapered fiber portion 2 is coated with a layer of the composite bleachable material 3. This absorber is fabricated as follows: a portion of an uncoated standard single-mode optical fiber 4 is prepared by removing a protective polymeric layer 5; removal of the polymeric layer 5 is performed without damaging a surface of the fiber itself. Later on, said uncoated fiber portion is tapered by using a well-known heating and pulling method. Slow and steady pulling of a fiber ensures that a fiber cladding 6 and a core 7 become thinner proportionally. Said fiber is tapered to an extent that a diameter of the cladding in the tapered portion 2 becomes equal to a diameter of the core of the untapered fiber 4, i.e. from 6 to 10 micrometers. Further, the tapered fiber portion 2 is coated with a composite bleachable material consisting of an inorganic matrix and a nonlinear absorption material. An index of refraction of said inorganic matrix must be similar to an index of refraction of the optical fiber 4. SiO₂ glass matrix suits best. Said nonlinear absorption material that is embedded into the inorganic matrix can be selected from a group consisting of single-wall carbon nanotubes, graphene and semiconductor quantum dots. The composite bleachable material, composed by the inorganic matrix, preferably SiO₂, and the nonlinear material, preferably CNTs, is fabricated via a sol-gel method.

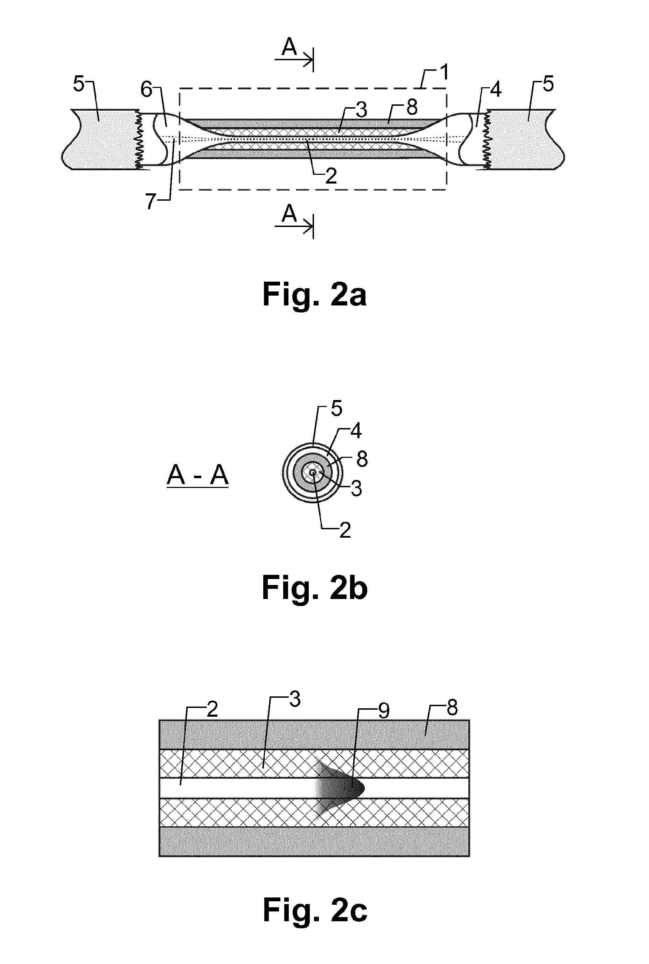

A fiber saturable absorber according to Fig.2a-2b is similar to the one of the Figs.1a - 1b, but additionally it is coated with a protective layer 8 which may be a polymeric material equivalent to the material 5 covering the whole fiber. The layer 8 gives additional protection from external factors. A transverse intensity profile 9 of a light pulse propagating inside the saturable absorber of Figs.1a, 1b and Figs.2a, 2b is depicted in Fig.1c and Fig.2c. In the tapered fiber portion 2 a significant part of a decaying laser field, which is called an evanescent field, extends beyond the fiber edges and, therefore, interacts with the surrounding composite bleachable material 3. This interaction affects the whole laser field as the evanescent tail is an integral part of the guided wave. Because of the nonlinear absorption property of the carbon nanotubes (or graphene, or semiconductor quantum dots) incorporated inside said composite material, the light propagating inside the saturable absorber 1 experiences intensity-dependent losses. The higher the intensity, the relatively smaller losses are experienced.

An interaction strength of the light with said composite bleachable material in the saturable absorber of Figs.1a, 1b and Figs.2a, 2b can be controlled by varying_theses parameters: a diameter and a length of the tapered fiber portion 2, a thickness of the composite bleachable material 3 layer and its index of refraction, as well as a concentration of carbon nanotubes (or graphene flakes or quantum dots). Geometrical parameters of the tapered fiber portion 2 of the saturable absorber of this invention are determined experimentally to make cumulative losses due to unsaturated absorption, scattering and diffraction should be in a range from 1% to 50% for laser light propagating therein. The best mechanical and waveguiding properties of the saturable absorber are obtained when the composite bleachable material 3 fills the whole tapered portion 2 of the fiber. The index of refraction of the composite material based on SiO₂ matrix is similar to the index of refraction of the standard optical fiber. Therefore, the evanescent field can deeply penetrate into a layer of the composite bleachable material 3. Also, in a case when the refractive index of a material 3 covering the tapered fiber portion 2 is very close to the refractive index of a fiber material, losses are small at transition from the untapered fiber 4 to the tapered fiber portion 2. On the other hand, when said refractive indices are very close waveguiding properties of the saturable absorber deteriorate because a boundary surface for total internal reflection does not exist. Waveguiding properties of the saturable absorber are improved by making an index of refraction of the composite material 3 surrounding the fiber taper 2 slightly lower than the one of the fiber material. This may be done at fabrication of the composite material 3 by changing sol-gel process conditions. A porosity of the composite material fabricated via the sol-gel method, and therefore an index of refraction, depend on these technological parameters: a composition of a colloidal solution, time and temperature of a gel formation, annealing conditions.

A determination of optimal fabrication conditions and thus the porosity and the refractive index of the composite material 3 allows for achieving good waveguiding properties of the saturable absorber of this invention, while the evanescent field penetration depth still ensures a strong interaction with the nonlinear material (carbon nanotubes, graphene, semiconductor quantum dots). It is estimated that a difference of 1% between refractive indices of the fiber cladding 6 and the composite material 3 is sufficient to have diffractive losses of the saturable absorber of this invention coinciding with the ones of a standard fiber.

The saturable absorber of this invention, presented in Figs. 1a - 2c and described in the preceding sections, is advantageous as compared to the prior art saturable absorber of the tapered-fiber geometry coated with a composite material based on a polymer matrix. Interaction between the laser radiation and the nonlinear material (carbon nanotubes) is stronger because of said deeper laser field penetration. Also, there is an alternative for the geometry selection: one may choose a thicker waist of the fiber taper, up to tens of micrometers, to have the same penetration depth as in saturable absorbers coated with composite materials based on polymer matrices. The larger diameter of the waist makes the tapered fiber stronger. Further, the solidified composite material based on the inorganic matrix works as a mechanical stabilizer for the tapered fiber portion.

Figs.3a, 3b illustrate a saturable absorber comprising a fiber portion with one groove inscribed therein. A saturable absorber is formed by inscribing a groove 10 and filling it with the saturable bleachable material 3 described before. An additional polymeric layer 8 may by coated for a better protection from external factors (Figs.4a, 4b).

A strength of interaction between the laser radiation and the composite bleachable material 3 depends on a size of the groove, especially on the depth, as well as on the refractive index of the material 3, also on its layer thickness and concentration of the carbon nanotubes (or graphene flakes, or QDs). Various number and arrangements of grooves are possible (see Figs.5a - 6b). The best mechanical properties are achieved when the composite material 3 fills the whole volume of the groove/grooves. In the saturable absorber of the present invention a number, sizes and arrangement of the grooves are chosen such that said composite bleachable material 3 contributes to laser light losses within a range from 1% to 50%.

Modem technologies allow for inscription of grooves of small sizes. When a groove size in a transverse to light propagation direction does not exceed 10 micrometers, light losses due to scattering are negligible. A groove size along light propagation direction may exceed the transversal size by several times. Since the material 3 that fills the groove 10 is of the similar refractive index to that of the fiber in which said groove is inscribed, laser field penetrates well into the groove region. This ensures a strong light interaction with the composite bleachable material 3. In order to maintain waveguiding properties of the saturable absorber, the refractive index of the composite bleachable material 3 filling the groove/grooves is made slightly lower than the one of the fiber material.

In saturable absorbers of Figs.4a - 6b, one or more grooves, which are formed in a fiber portion and filled with the composite bleachable material 3, are additionally coated with a protective layer 8 similar to the polymeric layer 5 covering the whole fiber. Moreover, the saturable absorber of the groove geometry is particularly mechanically stable. Mechanical properties are much better than mechanical properties of the tapered-fiber geometry saturable absorber since an inner structure of the fiber is preserved while inscribing the groove, only a small defect is introduced. A mechanical stability of the fiber with the grooves that are filled with a solid composite material does not differ from a mechanical stability of the fiber before inscription of the grooves.

In Figs.7a - 9b yet another configuration of the saturable absorber 1 of this invention is depicted, wherein at least one hole is formed across an optical fiber and filled with said composite bleachable material 3. A saturable absorber according Figs.7a, 7b comprises a fiber portion with a single transversal hole 14. Variuos sizes and arrangement of said at least one hole are possible (see Figs.8a - 9b): narrower or wider than the fiber core 7, centered or shifted with respect to the axis of the fiber; located in one or different planes. By this a strength of interaction is controlled, and an absorbed power is distributed. A hole width in a transverse to light propagation direction falls within a range from few to few tens of micrometers; along the light propagation - from ten micrometers to few millimeters. The number, sizes and arrangement of holes are selected such that laser light traversing the saturable absorber 1 experiences losses which are in a range between 1% and 50%.

The flexibility to make grooves and holes of various sizes and arrangements, without strongly affecting an inner fiber structure, makes the saturable absorbers of the groove- and hole-geometry advantageous against the tapered-fiber geometry. The proper number of the grooves or holes formed in the fiber portion and their configuration, or suitable geometrical parameters of the tapered fiber portion are determined experimentally from the amount of said losses.

The saturable absorber according to any of configurations illustrated in Figs.1a - 9b are easy to fabricate, low-cost and reliable optical elements which can be used as mode-lockers for high power fiber lasers. Further, a compactness of absorbers of the present invention allows for realization of mode-locked all-fiber lasers.

In Fig.10 and Fig.12, saturable absorber mirrors based on fiber technology are depicted. The saturable absorber mirrors of the present invention comprise a fiber Bragg grating with the incorporated saturable absorber of this invention according to any configuration illustrated in Figs.3a- Fig.9b. The fiber Bragg grating with an incorporated saturable absorber has many advantages against saturable absorber mirrors of the prior art.

The saturable absorber mirror 15 according to Fig.10 comprises a fiber Bragg grating with a hole-geometry saturable absorber of Figs.7a, 7b incorporated therein. It is a schematic drawing in which an aspect ratio between the core 7 and cladding 6 sizes is not preserved. A diameter of a standard single-mode fiber core is from a range between 6 and 10 micrometers, while a thickness of a cladding - 125 micrometers. Regions 16 in the fiber core 6 with an increased index of refraction, which are arranged at a certain period 17, form a fiber Bragg grating. In real fiber Bragg gratings a number of regions 16 with an increased index of refraction may be up to several thousands, but in Fig.10 for illustrative purposes only just a few periods of refractive index variation are drawn.

Depending on a magnitude of a nonlinear absorption needed to be obtained, a width of the hole 14 transversally to the light propagation direction can be smaller or larger than the fiber core 7 diameter. A width of the hole 14 along the light propagation can be up to few millimeters. Since a direct interaction between the laser light and the composite bleachable 3 material occurs, a concentration of nonlinear material (e.g., CNTs) within the composite material must not exceed a certain value with which a heat generated by an absorbed light energy would not damage a structure of the Bragg grating. As a further suggestion, more than one hole (as in Figs.8a - 9b) can be formed in order to have a better heat distribution.

Absorption of the composite bleachable material 3 saturates most effectively when the hole 14 is close to a front surface (plane 18) of the mirror because laser radiation intensity is highest here. This is due to an interference of laser beams 19, 20 traveling in forward and backward directions. As a result of the interference radiation intensity *I* close to the plane 18 is up to four times higher than intensity *I*₀ of each individual laser beam 19 or 20. Placing of the bleachable material 3 in a zone of higher intensity ends with a more effective saturable absorption. This is a common feature of all saturable absorber mirrors.

A quasi-stationary electric field distribution localized in a space consists of multiple maxima The intensity maxima (Fig.11) inside the fiber Bragg grating (a region within a length 21) arise because of numerous reflections of the light beam on boundaries between regions of different refractive indices. A length 21 of the Bragg grating may reach few millimeters and comprise from few tens up to several thousands of these reflective boundaries. Outside the fiber Bragg grating, the intensity maxima are formed by the interference of the incident to the grating and reflected beams 19, 20. A half-width 22 of the intensity distribution envelope 23 depends on a pulse duration (for a picosecond pulse it seeks few millimeters).

A possibility to fabricate a hole of various sizes allows for incorporation of the absorbing material within a region that embraces several intensity peaks. When the hole width along the light propagation falls within a range from 10µm to 1mm, the composite bleachable material 3 covers few to few tens of said intensity peaks. The saturable absorption due to each of them sums up. An important aspect is that the hole should be formed in the vicinity of a fiber Bragg grating without significantly changing its reflectivity. Thus, in the saturable absorber mirror of Fig.10, which comprises a fiber Bragg grating having a hole crossing through a center of the fiber core 7, the hole must not intersect the grating structure at all or intersect just a few regions 16 of the increased index of refraction.

The saturable absorber mirror 15 of Fig.12 comprises a fiber Bragg grating with an incorporated groove-geometry saturable absorber analogous to those illustrated in Figs.3a-6b.

The latter configuration of the mirror 15 may be necessary when there is a need to affect the intracavity laser radiation while not to influence a pump radiation traversing the mirror. Also in cases when a power of laser radiation is high. In the mirror of Fig.12 the groove does not spoil mirror's reflectivity. Therefore, the groove or few of them can be inscribed on the top of the grating structure overlapping many intensity peaks outside (on the right hand from the plane 18), as well as inside (on the left hand from the plane 18) the mirror.

The saturable absorber mirror of the present invention is completely compatible with fiber technology, what enables realization of an all-fiber mode-locked laser. Further, it is much cheaper and is easier fabricated as compared to the semiconductor saturable absorber mirrors.

Fig.13 - Fig.19 depict mode-locked fiber lasers with resonators containing the saturable absorber 1 or the saturable absorber mirror 15 of the present invention.

Fig.13 schematically illustrates a mode-locked fiber laser with a linear cavity consisting of the following components: an active fiber 24, end mirrors 25, 26, an element 27 for directing a pump radiation 28 into the cavity, an element 29 for directing a laser radiation 30 out from the cavity, the saturable absorber 1, also, if necessary, means 31 for polarization control and means 32 for dispersion compensation. Various layout options of laser components are possible. It may comprise a resonator without free-space components since all said optical elements can be fabricated on the basis of an optical fiber. In a laser configuration according to Fig.13 the end mirrors 25 and 26 are highly-reflective fiber Bragg gratings which also act as spectral filters ensuring a high spectral irradiance necessary for effective mode-locking. The saturable absorber is accomplished according to any one of the Fig.1a - Fig.9b illustrations, and acts as a passive mode-locker. In principal, it may be placed anywhere within laser cavity, though the most effective formation of the ultrashort pulse from initial radiation fluctuations occurs when the mode-locker is as close as possible to one of resonator end mirrors.

A laser of Fig.14 is similar to the laser of Fig.13 but instead of a simple fiber Bragg grating 25 and a saturable absorber 1 it has a saturable absorber mirror 15 (see Fig.10 or Fig.12) of this invention which acts as an end mirror and a mode-locker at the same time.

Fig.15a, Fig.15b provide illustrations of analogous configurations of mode-locked fiber lasers but with a coupling of the pump radiation through one of the end mirrors. Other resonator components are arranged so that the pump radiation is minimally scattered and absorbed before entering the active fiber 24.

Fig.16a, Fig.16b illustrate yet other configurations of linear-cavity mode-locked fiber lasers with laser radiation outcoupling through a partially transparent end mirror 33.

Fig.17 schematically illustrates a mode-locked fiber laser with a ring cavity which consists of these components: the active fiber 24, the elements 27, 29 for pump radiation incoupling and laser radiation outcoupling, the saturable absorber 1, the elements 31, 32 for polarization control and dispersion compensation, as well as a spectral filter 34 and an isolator 35.

Fig.18 - a ring-cavity configuration of the mode-locked fiber laser with the saturable absorber mirror 15. Here, the mirror 15 is placed in a branch, and the laser radiation is directed to and from the mirror with the help of a circulator 36. Laser layouts of Fig.17, Fig.18 can be realized without using free-space components.

In Fig.19 yet another configuration of a linear-cavity mode-locked fiber laser is depicted. It can also be realized using only fiber-optical elements. An outcoupling end mirror 37 of the laser according to Fig. 19 is a fiber loop mirror which comprises a fiber beam splitter 38 and a loop 39 of a fiber connecting outputs of said fiber beam splitter 38.

The mode-locked fiber laser of the present invention is very stable, low-cost and compact since all the components, including mirrors and a mode-locker, can be accomplished using fiber technology. Moreover, the fiber laser employing the saturable absorber or the saturable absorber mirror of the present invention is able to operate in a high power range. A combination of said characteristics is highly attractive for industrial users.

It is understood that all the given illustrations are possible but not limiting realizations of the present invention. The invention covers all modifications, equivalents, and alternatives falling within the spirit and scope of the invention. Accordingly, the scope of protection is disclosed in the claims.

All modifications of fiber saturable absorbers that have not been illustrated in the drawings Fig.1a - Fig.9b but not diverge from the idea of the present invention are protected by this invention.

Any variations of a fiber Bragg grating with an incorporated saturable absorber of the present invention that have not been illustrated in the drawings Fig.10 and Fig.12 but not diverge from the idea of the present invention are protected by this invention.

Alternative configurations of fiber lasers comprising the saturable absorber or the fiber Bragg grating with a saturable absorption property of the present invention that have not been demonstrated in the drawings Fig.13 - Fig.19 but not diverge from the idea of the present invention are protected by this invention.

## Claims

1. Saturable absorber for fiber laser mode-locking comprising a single-mode optical fiber (1) having a tapered fiber portion (2), which is coated with a composite bleachable material, ***characterized in that***
said composite bleachable material (3) comprises:
- an inorganic matrix with an index of refraction similar to an index of refraction of said single-mode optical fiber,
- a material with a nonlinear absorption property embedded into said inorganic matrix,
wherein said material with a nonlinear absorption property bleaches when exposed to laser radiation of high intensity, values of which are in a range from 5MW/cm² to 500MW/cm², whereas
a waist diameter and a length of said tapered fiber portion (2) are chosen to satisfy a condition
that laser light while propagating in the saturable absorber is affected by said composite bleachable material (3) and experiences losses which are in a range between 1% and 50%.

2. Saturable absorber for fiber laser mode-locking comprising a single-mode optical fiber (1) having a fiber portion with at least one groove (10) or at least one hole (14) formed therein, which is filled with a composite bleachable material, ***characterized in that*** said composite bleachable material (3) comprises:
- an inorganic matrix with an index of refraction similar to an index of refraction of said single-mode optical fiber,
- a material with a nonlinear absorption property embedded into said inorganic matrix, wherein said material with a nonlinear absorption property bleaches when exposed to laser radiation of high intensity, values of which are in a range from 5MW/cm² to 500MW/cm², whereas
a number of said grooves (10) or holes (14) formed in said fiber portion (2) and their configuration are chosen to satisfy a condition that laser light while propagating in the saturable absorber is affected by said composite bleachable material and experiences losses which are in a range between 1% and 50%.

3. Saturable absorber according to claim 1 or claim 2, ***characterized in that*** said composite bleachable material (3) is fabricated via a sol-gel manufacturing technology.

4. Saturable absorber according to any one of claims 1-3, ***characterized in that*** said inorganic matrix is SiO₂ glass matrix fabricated via a sol-gel technology.

5. Saturable absorber according to any one of claims 1-4, ***characterized in that*** said material with a nonlinear absorption property embedded into the inorganic matrix is selected from a group consisting of carbon nanotubes, graphene and semiconductor quantum dots.

6. Saturable absorber according to any one of claims 2 - 5, ***characterized in that*** said groove or grooves (10) formed in the fiber portion (2) extend along said fiber portion.

7. Saturable absorber according to any one of claims 2-5, ***characterized in that*** said hole or holes (14) formed in the fiber portion (2) cross said fiber portion transversally.

8. Saturable absorber according to any one of the preceding claims, ***characterized in that*** the tapered fiber portion coated with the composite bleachable material or the fiber portion with at least one groove or at least one hole filled with the composite bleachable material is coated with a polymer layer (8).

9. Mode-locked fiber laser comprising a resonator with the saturable absorber according to any one of the preceding claims 1-8.

10. Fiber Bragg grating with a saturable absorption property for fiber laser mode-locking comprising a fiber Bragg grating with the incorporated saturable absorber according to any one of claims 2 - 8.

11. Mode-locked fiber laser wherein one of resonator end mirrors is the fiber Bragg grating with a saturable absorption property according to claim 10.
